(19) Europäisches Patentamt
European Patent Office
Office européen des brevets

(11) **EP 4 696 913 A1**

(12) **EUROPÄISCHE PATENTANMELDUNG**

(43) Veröffentlichungstag:
**18.02.2026 Patentblatt 2026/08**

(21) Anmeldenummer: **25192619.2**

(22) Anmeldetag: **29.07.2025**

(51) Internationale Patentklassifikation (IPC):
***F16K 31/06*** *(2006.01)*

(52) Gemeinsame Patentklassifikation (CPC):
**F16K 31/0693; F16K 31/0655**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **13.08.2024 DE 102024123126**

(71) Anmelder: **Wagner GmbH & Co.
Fahrzeugteilefabrik KG
36043 Fulda (DE)**

(72) Erfinder: **Reinhard, Manuel
36093 Künzell (DE)**

(74) Vertreter: **SSM Sandmair
Patentanwälte Rechtsanwalt
Partnerschaft mbB
Joseph-Wild-Straße 20
81829 München (DE)**

(54) **ELEKTROMAGNETISCHES VENTIL FÜR KURZE SCHALTZEITEN**

(57)    Ein elektromagnetisches Sitzventil umfasst ein Ventilgehäuse (1-15) mit einer Ventilkammer (10) mit einem ersten Kammerzugang (11) und einem zweiten Kammerzugang (12) für ein Fluid, einen Ventilsitz (4), über den der erste Kammerzugang (11) in die Ventilkammer (10) mündet und der um eine Ventilachse (L) umläuft, ein Schließelement (20), das in eine Schließrichtung (X) bis in eine Schließposition, in der es mit Dichtkontakt am Ventilsitz (4) anliegt und den ersten Kammerzugang (11) vom zweiten Kammerzugang (12) trennt, und in eine Freigaberichtung (-X) bis in eine Freigabeposition, in der es den Ventilsitz (4) freigibt, in axialer Richtung ($\pm$X) hin und her beweglich ist, eine elektrische Spule (35) und einen in axialer Richtung ($\pm$X) hin und her beweglichen Anker (30) zur Erzeugung einer Stellkraft, die in axialer Richtung ($\pm$X) auf das Schließelement (20) wirkt, wobei das Schließelement (20) einen Schließelement-Hohlraum (21) und/oder der Anker (30) einen Anker-Hohlraum (31) aufweist.

Fig. 3

EP 4 696 913 A1

**Beschreibung**

Die Erfindung betrifft ein elektromagnetisches Ventil zum Steuern oder Regeln eines Fluids. Das Ventil kann im Fahrzeugbau zum Einsatz gelangen und dort insbesondere in einem Servosystem zur hydraulischen Unterstützung der Lenkung. Grundsätzlich kann die Erfindung aber auch in anderen Servosystemen oder Fluidsystemen im Allgemeinen sowohl im Fahrzeugbau als auch außerhalb des Fahrzeugbaus verwendet werden.

In vielen Anwendungen besteht die Forderung nach schnellen Schaltzeiten. Die Forderung besteht insbesondere in sicherheitsrelevanten Hydrauliksystemen, wie etwa in hydraulisch unterstützten Lenksystemen von Fahrzeugen.

Es ist daher eine Aufgabe der Erfindung, ein Ventil mit kurzer Schaltzeit bereitzustellen.

Wünschenswert ist ein Ventil, dass innerhalb kürzester Zeit zwischen Sperrung und Durchfluss umgesteuert werden kann.

Eine andere oder weitere Aufgabe kann darin gesehen werden, ein Ventil zu schaffen, das für den Einsatz in einem System zur hydraulischen Lenkunterstützung geeignet ist, beispielsweise als Back-up Ventil zur Neutralisierung der Lenkunterstützung in einem Notfall, wie etwa bei einem Stromausfall.

Gegenstand der Erfindung ist ein elektromagnetisches Ventil in Form eines Sitzventils. Das Ventil umfasst ein Ventilgehäuse mit einer Ventilkammer, in die ein erster Kammerzugang und ein zweiter Kammerzugang für ein Fluid münden. Bei dem Fluid kann es sich insbesondere um ein hydraulisches Fluid handeln. Der erste Kammerzugang mündet über einen Ventilsitz in die Ventilkammer. Der Ventilsitz läuft um eine Ventilachse um und definiert zugleich die Ventilachse. Das Ventil umfasst ferner ein Schließelement, das in eine Schließrichtung bis in eine Schließposition, in der es mit Dichtkontakt am Ventilsitz anliegt und den ersten Kammerzugang vom zweiten Kammerzugang trennt, und in eine Freigaberichtung bis in eine Freigabeposition, in der es den Ventilsitz freigibt, in axialer Richtung hin und her beweglich ist. Das Schließelement kann in Schließ- und Freigaberichtung linearbeweglich sein. Grundsätzlich soll aber nicht ausgeschlossen werden, dass das Schließelement der axialen Bewegung überlagert auch eine Bewegung radial zur Ventilachse ausführt, indem es beispielsweise schwenkbeweglich ist. Die Angabe "in axialer Richtung beweglich" schließt somit auch Ausführungen ein, in denen das Schließelement mit einer axialen Richtungskomponente und einer zur Ventilachse radialen Richtungskomponente beweglich ist, wobei die axiale Komponente vorzugsweise größer als die radiale Komponente ist.

Weitere Bestandteile des Ventils sind eine elektrische Spule und ein in axialer Richtung hin und her beweglicher Anker zur Erzeugung einer Stellkraft, mit der das Schließelement beaufschlagbar ist, die also über den Anker auf das Schließelement wirkt. Hierzu ist der Anker mit dem Schließelement gekoppelt. Der Anker kann insbesondere durch bloßen Druckkontakt in axialer Richtung und somit in einem reinen Anschlagkontakt mit dem Schließelement gekoppelt sein. Grundsätzlich können das Schließelement und der Anker aber auch mittels Stoffschluss oder Reibschluss verbunden sein. Das Schließelement und der Anker können über ein oder mehrere Zwischenglieder gekoppelt sein. Vorteilhafterweise sind sie jedoch direkt, beispielsweise durch direkten axialen Anschlagkontakt, miteinander gekoppelt.

Die vom Ventilsitz umgebene Ventilachse kann eine zentrale Achse des Ventilsitzes und/oder der Spule und/oder des Ankers sein. In der Schließposition trennt das Schließelement die Ventilkammer vom ersten Kammerzugang. Der zweite Kammerzugang kann mit der Ventilkammer permanent verbunden sein. Der erste Kammerzugang führt in axialer Richtung in die Ventilkammer, d. h. er mündet axial in die Ventilkammer, sobald sich das Schließelement aus dem Dichtkontakt mit dem Ventilsitz bewegt hat. Der zweite Kammerzugang kann seitlich, in eine Richtung quer zur Ventilachse, in die Ventilkammer münden. Er kann insbesondere an einem die Ventilkammer umgebenden Mantelabschnitt des Ventilgehäuses angeordnet sein. Das Ventilgehäuse kann nur einen einzigen zweiten Kammerzugang oder mehrere zweite Kammerzugänge aufweisen. Die mehreren zweiten Kammerzugänge können an dem Mantelabschnitt des Ventilgehäuses in Umfangsrichtung voneinander beabstandet angeordnet und dementsprechend an mehreren Stellen in die Ventilkammer münden. Die mehreren zweiten Kammerzugänge können mit der Ventilkammer jeweils permanent verbunden sein.

Nach der Erfindung weist das Schließelement einen Schließelement-Hohlraum und/oder der Anker einen Anker-Hohlraum auf. Weist das Schließelement den Schließelement-Hohlraum auf, erstreckt sich dieser von einer vorderen Hohlraummündung, die dem ersten Kammerzugang axial zugewandt ist, bis zu einer dem ersten Kammerzugang axial abgewandten Rückseite des Schließelements durch das Schließelement. Der Schließelement-Hohlraum mündet an seiner vorderen Hohlraummündung in den ersten Kammerzugang und mündet mit seinem anderen Ende an der Rückseite des Schließelements. Weist der Anker den Anker-Hohlraum auf, erstreckt sich dieser von einer in axialer Richtung zum ersten Kammerzugang weisenden Vorderseite des Ankers bis zu einer rückwärtigen Hohlraummündung durch den Anker. Der Anker weist die rückwärtige Hohlraummündung an einer dem ersten Kammerzugang axial abgewandten Rückseite auf. Der Anker-Hohlraum somit mündet an der Vorderseite und der Rückseite des Ankers. Der jeweilige Hohlraum, d.h. der Schließelement-Hohlraum und/oder der Anker-Hohlraum, ist somit ein Durchgang. Indem das Schließelement und/oder der Anker in diesem Sinne als Hohlkörper gebildet ist oder sind, wird beim jeweiligen Element Masse angespart, so dass unter der Einwirkung einer gegebenen Axialkraft die Beschleunigung in Richtung der Axialkraft vergrößert und die Reaktionszeit bzw. Schaltzeit für das Umsteuern des Ventils zwischen Schließzustand und Freigabe verkürzt wird.

In bevorzugten Ausführungen weist das Schließelement den Schließelement-Hohlraum und der Anker den Anker-Hohlraum auf. In derartigen Ausführungen ist weiter vorteilhaft, wenn sich ein einheitlicher Hohlraum, der den Schließelement-Hohlraum und den Anker-Hohlraum umfasst, axial zusammenhängend durch das Schließelement und den Anker erstreckt. Der einheitliche Hohlraum kann an der vorderen Hohlraummündung des Schließelements in den ersten Kammerzugang und an der rückwärtigen Hohlraummündung des Ankers in einen rückwärtigen Gehäuseraum des Ventilgehäuses münden, so dass der einheitliche Hohlraum den ersten Kammerzugang mit dem rückwärtigen Gehäuseraum verbindet. Die Verbindung besteht vorteilhafterweise mit in Schließposition befindlichem Schließelement. Der erste Kammerzugang kann über den einheitlichen Hohlraum mit dem rückwärtigen Gehäuseraum auch mit in Freigabeposition befindlichem Schließelement verbunden sein. Bevorzugt sind der erste Kammerzugang und der rückwärtige Gehäuseraum stets, unabhängig von der Position des Schließelements, über den einheitlichen Hohlraum verbunden.

In Weiterbildungen sind das Schließelement und der Anker Bestandteil einer axial translatorischen Bewegungseinheit, die einen einheitlichen Hohlraum aufweist, der den Schließelement-Hohlraum und/oder den Anker-Hohlraum umfasst. Die Bewegungseinheit kann ein oder mehrere weitere Elemente, beispielsweise ein axial zwischen dem Schließelement und dem Anker angeordnetes Übertragungselement und/oder ein an der Rückseite des Ankers angeordnetes Element umfassen. Bevorzugt bilden jedoch bereits alleine das Schließelement und der Anker die Bewegungseinheit. "Axial translatorische Bewegungseinheit" bedeutet, dass die durch geeignete Kopplung zur Bewegungseinheit zusammengefassten Elemente axiale Translationsbewegungen gemeinsam ausführen.

In vorteilhaften Ausführungen erstreckt sich der einheitliche Hohlraum der Bewegungseinheit von der vorderen Hohlraummündung des Schließelements bis zu einer rückwärtigen Hohlraummündung an einer dem ersten Kammerzugang axial abgewandten Rückseite der Bewegungseinheit durch die Bewegungseinheit. Der einheitliche Hohlraum ist in derartigen Ausführungen ein durch die Bewegungseinheit erstreckter Durchgang, der den ersten Kammerzugang vorteilhafterweise mit dem bereits erwähnten rückwärtigen Gehäuseraum verbindet. Die vordere Hohlraummündung des Schließelements ist auch die vordere Hohlraummündung der Bewegungseinheit. Die rückwärtige Hohlraummündung der Bewegungseinheit kann insbesondere die rückwärtige Hohlraummündung des Ankers sein. Der vorstehend bereits zum Schließelement und Anker erwähnte einheitliche Hohlraum kann den einheitlichen Hohlraum der Bewegungseinheit bilden.

Wenn sowohl das Schließelement als auch der Anker als Hohlkörper gebildet ist, kann im Vergleich mit Ausführungen, in denen nur das Schließelement oder nur der Anker hohl ist, noch mehr Masse eingespart und in der Folge die für das Umsteuern erforderliche Schaltzeit weiter reduziert werden. Durch die Ausbildung eines einheitlichen Hohlraums, der den ersten Kammerzugang mit dem rückwärtigen Gehäuseraum verbindet, können das Schließelement und der Anker in Bezug auf axialen Fluiddruck ausgeglichen sein, so dass die beiden Elemente, die vorzugsweise zu einer Bewegungseinheit zusammengefasst sind, frei von axialem Differenzdruck hin und her bewegbar sind. Eine Kombination beider Merkmale, nämlich der Reduzierung der Masse und der Auslegung auf minimalen Differenzdruck, vorzugsweise Null-Differenzdruck, führt nicht nur zu kurzen Schaltzeiten, sondern trägt auch zur Reduzierung des zum Bewegen des Schließelements erforderlichen Kraftaufwands bei. Darüber hinaus werden die Schaltzeit und die benötigte Kraft nicht oder allenfalls in einem praktisch nicht relevanten Ausmaß durch den am jeweiligen Kammerzugang herrschenden Fluiddruck beeinflusst.

Im Hinblick auf die Massenträgheit ist es vorteilhaft, wenn das Schließelement über Alles gemessen ein Gesamtvolumen aufweist, das höchstens dem Vierfachen oder besser noch höchstens dem Dreifachen des Volumens des Schließelement-Hohlraums entspricht. In Bezug auf den Anker ist es vorteilhaft, wenn der Anker über Alles gemessen ein Gesamtvolumen aufweist, das höchstens dem Fünffachen oder besser noch höchstens dem Vierfachen des Volumens des Anker-Hohlraums entspricht. Sind das Schließelement und der Anker Bestandteil einer Bewegungseinheit, ist es vorteilhaft, wenn die Bewegungseinheit über Alles gemessen ein Gesamtvolumen aufweist, das höchstens dem Fünffachen oder besser noch höchstens dem Vierfachen des Volumens des einheitlichen Hohlraums entspricht. Ein als Durchgang gebildeter Schließelement-Hohlraum und/oder Anker-Hohlraum und/oder einheitlicher Hohlraum trägt nicht nur zur Reduzierung der Massenträgheit, sondern auch zur Verringerung des Strömungswiderstands des jeweiligen Elements oder der Bewegungseinheit bei.

Im Sinne kurzer Schaltzeiten ist es zweckmäßig, wenn der erste Kammerzugang axial auf der Höhe des Ventilsitzes eine große durchströmbare Querschnittsfläche hat, so dass sich in axialer Richtung zwischen dem Ventilsitz und einer Schließfläche des Schließelements auch schon bei einem geringen Hub des Schließelements ein großer durchströmbarer Verbindungsquerschnitt einstellt. Vorteilhaft ist hierbei auch, dass die Länge des Hubs, den das Schließelement aus der Schließposition bis in die Freigabeposition ausführt, klein sein kann. Die Schließfläche ist eine Fläche an der Vorderseite des Schließelements, in deren Bereich das Schließelement in der Schließposition im Dichtkontakt mit dem Ventilsitz ist. Der Dichtkontakt kann nahezu linienförmig sein.

Bezeichnet K den Durchmesser einer Kreisfläche, die der Größe nach der durchströmbaren Querschnittsfläche des ersten Kammerzugangs axial auf der Höhe des Ventilsitzes entspricht und bezeichnet H die Länge des Hubs, die das Schließelement bei der Bewegung aus der Schließposition bis in die Freigabeposition ausführt, gilt vorteilhafterweise K ≥ 3 • H oder K ≥ 4 • H. Der durchströmbare Verbindungsquerschnitt, der sich unmittelbar nach dem Lösen des Dichtkontakts öffnet und während der Freigabebewegung vergrößert, bis er in der Freigabeposition des Schließelements seine Nominalgröße erreicht, hat die Form eines um die Ventilachse umlaufenden Ringstreifens. Die Umfangsfläche des Ringstreifens kann als Maß für die Größe des Verbindungsquerschnitts dienen. Der Verbindungsquerschnitt ist der Größe nach daher proportional zum Produkt aus äquivalentem Durchmesser K und der Hublänge H. Je größer der äquivalente Durchmesser K ist, desto größer ist der Zuwachs des Verbindungsquerschnitts pro Hublängeneinheit und desto kleiner kann bei vorgegebener Nominalgröße des Verbindungsquerschnitts die Hublänge bis zum Erreichen der Freigabeposition sein.

Das Schließelement umgibt den Schließelement-Hohlraum, soweit vorhanden, mit einem Schließelement-Innenumfang. Dieser Innenumfang kann sich vorteilhafterweise über die gesamte Länge des Schließelement-Hohlraums zylindrisch glatt in axialer Richtung erstrecken. Dies schließt selbstverständlich nicht aus, dass der Schließelement-Innenumfang unmittelbar an der vorderen Hohlraummündung und/oder unmittelbar an der Mündung am rückwärtigen Stirnende des Schließelements über eine axial kurze Abfasung ausläuft. In diesem Sinne kann der Schließelement-Hohlraum über seine gesamte Länge zylindrisch, beispielsweise kreiszylindrisch, sein. Der Schließelement-Hohlraum kann über seine gesamte Länge den gleichen Querschnitt aufweisen.

Der Anker umgibt den Anker-Hohlraum, soweit vorhanden, mit einem Anker-Innenumfang. Der Anker-Innenumfang kann sich vorteilhafterweise über zumindest den überwiegenden Teil der axialen Länge des Ankers zylindrisch glatt in axialer Richtung erstrecken. Dies schließt selbstverständlich nicht aus, dass der Anker-Innenumfang unmittelbar an einer Hohlraummündung an der Vorderseite des Ankers und/oder unmittelbar an der rückwärtigen Hohlraummündung über eine axial kurze Abfasung ausläuft. In diesem Sinne kann der Anker-Hohlraum über zumindest den überwiegenden Teil der axialen Länge des Ankers zylindrisch, beispielsweise kreiszylindrisch, sein. Der Anker-Hohlraum kann über zumindest den überwiegenden Teil der axialen Länge des Ankers den gleichen Querschnitt aufweisen.

Das Schließelement und/oder der Anker kann oder können jeweils hülsenförmig sein. Das Schließelement und/oder der Anker kann somit ein Hülsenkörper sein.

Ist das Schließelement hülsenförmig, weist es eine Hülsenwand mit einer Außenweite auf, die über die axiale Länge des Schließelements mehrfach größer als die Wandstärke der Hülsenwand ist. Vorzugsweise ist die Außenweite überall wenigstens viermal oder fünfmal so groß wie die Wandstärke der Hülsenwand des Schließelements. Ist das Schließelement über seinen Außenumfang kreiszylindrisch, entspricht die Außenweite des Schließelements dem Durchmesser des Außenumfangs. Anderenfalls wird die im jeweiligen Querschnitt des Schließelements kleinste Außenweite für den Vergleich herangezogen. Der Schließelement-Hohlraum weist eine Weite auf, die über die axiale Länge des Schließelements vorteilhafterweise wenigstens zweimal oder wenigstens dreimal größer als die Wandstärke der Hülsenwand des Schließelements ist. Ist der Schließelement-Hohlraum kreiszylindrisch, entspricht die Weite des Schließelement-Hohlraums dem Durchmesser des Schließelement-Hohlraums. Anderenfalls wird die im jeweiligen Querschnitt des Schließelements kleinste Weite des Schließelement-Hohlraums für den Vergleich herangezogen.

Ist der Anker hülsenförmig, weist er eine Hülsenwand mit einer Außenweite auf, die über die axiale Länge des Ankers mehrfach größer als die Wandstärke der Hülsenwand ist. Vorzugsweise ist die Außenweite überall wenigstens dreimal oder viermal so groß wie die Wandstärke der Hülsenwand des Ankers. Ist der Ankert über seinen Außenumfang kreiszylindrisch, entspricht die Außenweite des Ankers dem Durchmesser des Außenumfangs. Anderenfalls wird die im jeweiligen Querschnitt des Ankers kleinste Außenweite für den Vergleich herangezogen. Der Anker-Hohlraum weist eine Weite auf, die über die axiale Länge des Ankers vorteilhafterweise wenigstens 1,5-mal oder wenigstens zweimal größer als die Wandstärke der Hülsenwand des Ankers ist. Ist der Anker-Hohlraum kreiszylindrisch, entspricht die Weite des Anker-Hohlraums dem Durchmesser des Anker-Hohlraums. Anderenfalls wird die im jeweiligen Querschnitt des Ankers kleinste Weite des Anker-Hohlraums für den Vergleich herangezogen.

Der Anker-Hohlraum kann sich in Richtung auf die rückwärtige Hohlraummündung vorteilhafterweise radial weiten und über die so erhaltene Aufweitung in einen rückwärtigen Gehäuseraum des Ventilgehäuses münden. Die Aufweitung kann bogenförmig konkav bzw. glockenförmig oder vorteilhafterweise trichterförmig sein. Sie kann bogenförmig konvex bzw. trompetenförmig oder insbesondere konisch sein. Vorzugsweise ist sie über ihre gesamte Länge kontinuierlich glatt, also sprungfrei. Bei der Aufweitung handelt es sich nicht schlicht um eine Abfasung, sondern um eine ausgeprägte Aufweitung zur Vergrößerung des Anker-Hohlraums im rückwärtigen Hohlraumbereich. Die Aufweitung erstreckt sich in vorteilhaften Ausführungen über wenigstens 5% oder wenigstens 10% oder wenigstens 15% der axialen Gesamtlänge des Ankers. Andererseits ist es im Hinblick auf die elektromagnetische Feldstärke und damit die Stellkraft vorteilhaft, wenn sich die Aufweitung nur über maximal die Hälfte oder maximal ein Drittel der axialen Gesamtlänge des Ankers erstreckt. Der Anker-Hohlraum weitet sich zweckmäßigerweise bis unmittelbar zur rückwärtigen Hohlraummündung und weist am rückwärtigen Stirnende des Ankers einen größten Querschnitt auf. Vorteilhafterweise ist der Hohlraumquerschnitt unmittelbar an der rückwärtigen Hohlraummündung um wenigstens 50% oder wenigstens 100% größer als in einem Ankerabschnitt axial vor der Aufweitung. Durch die Aufweitung kann der Strömungswiderstand, den der Anker einer Bewegung in die Freigaberichtung entgegensetzt, verringert werden.

Wenn das Schließelement und der Anker Bestandteil einer axial translatorischen Bewegungseinheit sind, können sie innerhalb der Bewegungseinheit vorteilhafterweise durch axialen Anschlagkontakt, der in die Schließrichtung und in die Freigaberichtung wirkt, gekoppelt sein. Bevorzugt sind sie direkt miteinander in dem Anschlagkontakt. Die Stellkraft kann so gerichtet sein, dass sie den Anker in Richtung auf das Schließelement, vorzugsweise unmittelbar gegen das Schließelement, drückt.

In vorteilhaften Ausführungen umfasst das Ventil eine Federeinrichtung zur Erzeugung einer Federkraft, die der Stellkraft entgegen auf das Schließelement wirkt. Die Federeinrichtung kann am Anker axial abgestützt sein, die Federkraft also auf den Anker direkt und über den Anker auf das Schließelement wirken. Bevorzugt stützt sich die Federeinrichtung aber axial am Schließelement ab, so dass die Federkraft direkt auf das Schließelement wirkt. Sind das Schließelement und der Anker durch axialen Anschlagkontakt gekoppelt, werden sie von der Federkraft aufeinander zu, vorzugsweise unmittelbar gegeneinander, gedrückt.

Die Stellkraft kann in Freigaberichtung und die Federkraft dementsprechend in Schließrichtung wirken. Bevorzugt wird es jedoch, wenn die Stellkraft in Schließrichtung und die Federkraft in Freigaberichtung auf das Schließelement wirken. In bevorzugten Ausführungen drückt die Stellkraft das Schließelement gegen die Federkraft in den Dichtkontakt mit dem Ventilsitz. Entfällt die Stellkraft in einem Störfall, beispielsweise einem Stromausfall, hebt das Schließelement aufgrund der weiterhin wirkenden Federkraft vom Ventilsitz ab und bewegt sich in die Freigabeposition, führt also einen Freigabehub aus.

Die Federeinrichtung kann das Schließelement umgeben. Dies ermöglicht die Verwendung einer Feder mit großem Federquerschnitt und ist auch im Hinblick auf kleine Baulängen vorteilhaft. Die Federeinrichtung kann in der Ventilkammer aufgenommen sein, was eine schlanke Ventilausführung begünstigt. Die Federeinrichtung kann eine oder mehrere Federn umfassen. In einfachen und nicht zuletzt deshalb bevorzugten Ausführungen bildet eine einzelne Feder die Federeinrichtung. Die Federeinrichtung kann eine Schraubendruckfeder umfassen oder insgesamt vorteilhafterweise als Schraubendruckfeder gebildet sein.

Die Federeinrichtung, bevorzugt die eine Feder, kann am Schließelement axial abgestützt sein, so dass die Federkraft über eine Federabstützung des Schließelements direkt auf das Schließelement wirkt. Das Schließelement kann in Ausbildung der Federabstützung an seinem Außenumfang mehrere nur lokal nach außen vorragende Stützelemente aufweisen, an denen sich die Federeinrichtung axial abstützt. Die Stützelemente können jeweils flügelartig nach radial außen in die Ventilkammer vorragen. So können beispielsweise drei oder mehr lokale Stützelemente flügelartig vorragen. Die Stützelemente sind in Umfangsrichtung vorzugsweise gleichverteilt, also zueinander in gleichen Winkelabständen, angeordnet. Die in Umfangsrichtung gemessene größte Erstreckung des jeweiligen Stützelements ist vorteilhafterweise kleiner als der in Umfangsrichtung gemessene Abstand zwischen jeweils zwei in Umfangsrichtung benachbarten Stützelementen. Je kleiner die mit der Federabstützung am Schließelement einhergehende Querschnittsvergrößerung des Schließelements ist, desto kleiner ist auch eine mit der Federabstützung verbundene Erhöhung des Strömungswiderstands des Schließelements.

In vorteilhaften Ausführungen bildet das Ventilgehäuse für das Schließelement eine axiale Schließelement-Gleitführung. Die Ventilkammer kann über die Schließelement-Gleitführung, d.h. im Gleitkontakt des Schließelements mit der Schließelement-Gleitführung, abgedichtet sein. Alternativ oder bevorzugt zusätzlich kann das Ventilgehäuse für den Anker eine axiale Anker-Gleitführung bildet. Der Anker und die Anker-Gleitführung können im Gleitkontakt einen Dichtspalt bilden. Vorteilhafterweise bildet das Ventilgehäuse für das Schließelement und den Anker jeweils eine Gleitführung, wobei die im Gleitkontakt befindlichen Innenumfangs- und Außenumfangsflächen in vorteilhafter Ausführung aufeinander abgestimmt sind, um im Bereich der jeweiligen Gleitführung auch einen Dichtspalt zu bilden.

Das Ventil kann insbesondere als Sicherheitsventil in einem Hydrauliksystem zur Unterstützung der Lenkung eines Fahrzeugs verwendet werden. In dieser Verwendung wird eine besonders kurze Ventilschaltzeit gefordert.

Die Erfindung betrifft das Ventil als solches und auch ein Hydrauliksystem zur Unterstützung der Lenkung eines Fahrzeugs. Das Hydrauliksystem umfasst eine doppeltwirkende Kolben-Zylinder-Anordnung mit einem Zylinder und einem Kolben, der im Zylinder axial zwischen einem ersten Zylinderanschluss und einem zweiten Zylinderanschluss angeordnet ist. Der Kolben unterteilt den Zylinder in einen ersten Zylinderraum, in den der erste Zylinderanschluss mündet, und einen zweiten Zylinderraum, in den der zweite Zylinderanschluss mündet. Die Kolben-Zylinder-Anordnung ist im Lenksystem des Fahrzeugs zwischen dem Lenkorgan, das beispielsweise als Lenkrad gebildet ist, und den zu betätigenden Rädern angeordnet, um die manuellen Lenkkräfte hydraulisch zu unterstützen. Die beiden Zylinderräume werden auch als Lenkkammern bezeichnet. Das Hydrauliksystem umfasst ein erfindungsgemäßes Ventil. Der erste Zylinderraum ist über den ersten Zylinderanschluss mit dem ersten Kammerzugang des Ventils verbunden. Der zweite Zylinderraum ist über den zweiten Zylinderanschluss mit dem zweiten Kammerzugang oder den mehreren zweiten Kammerzugängen des Ventils verbunden. Nimmt das Schließelement die Freigabeposition ein, sind die beiden Zylinderräume der Kolben-Zylinder-Anordnung über das Ventil kurzgeschlossen. Die beiden Zylinderräume der Kolben-Zylinder-Anordnung gleichen sich im Freigabezustand des Ventils über das Ventil im Druck aus. Die hydraulische Lenkunterstützung wird dadurch neutralisiert und kann die dann rein manuell zu bewirkenden Lenkbewegungen des Fahrers nicht blockieren.

Auch in den nachstehend formulierten Aspekten werden Merkmale der Erfindung beschrieben. Die Aspekte sind in der Art von Ansprüchen formuliert und können diese ersetzen. In den Aspekten offenbarte Merkmale können die Ansprüche ferner ergänzen und/oder relativieren, Alternativen zu einzelnen Merkmalen aufzeigen und/oder Anspruchsmerkmale erweitern. In Klammern gesetzte Bezugszeichen beziehen sich auf ein nachfolgend in Figuren illustriertes Ausführungsbeispiel der Erfindung. Sie schränken die in den Aspekten beschriebenen Merkmale nicht unter den Wortsinn als solchen ein, zeigen andererseits jedoch bevorzugte Möglichkeiten der Verwirklichung des jeweiligen Merkmals und auch Erfindungsgegenstände für Teilungsanmeldungen auf.

1. Elektromagnetisches Sitzventil umfassend:

1.1 ein Ventilgehäuse (1-15) mit einer Ventilkammer (10), in die ein erster Kammerzugang (11) und ein zweiter Kammerzugang (12) für ein Fluid münden,

1.2 einen Ventilsitz (4), über den der erste Kammerzugang (11) in die Ventilkammer (10) mündet und der um eine Ventilachse (L) umläuft,

1.3 ein Schließelement (20), das in eine Schließrichtung (X) bis in eine Schließposition, in der es mit Dichtkontakt am Ventilsitz (4) anliegt und den ersten Kammerzugang (11) vom zweiten Kammerzugang (12) trennt, und in eine Freigaberichtung (-X) bis in eine Freigabeposition, in der es den Ventilsitz (4) freigibt, in axialer Richtung ($\pm$X) hin und her beweglich ist, und

1.4 eine elektrische Spule (35) und einen in axialer Richtung ($\pm$X) hin und her beweglichen Anker (30) zur Erzeugung einer Stellkraft, die in axialer Richtung ($\pm$X) auf das Schließelement (20) wirkt,

1.5 wobei das Schließelement (20) einen Schließelement-Hohlraum (21) aufweist, der sich von einer dem ersten Kammerzugang (11) axial zugewandten vorderen Hohlraummündung bis zu einer dem ersten Kammerzugang (11) axial abgewandten Rückseite des Schließelements (10) durch das Schließelement (20) erstreckt, und/oder

1.6 wobei der Anker (30) einen Anker-Hohlraum (31) aufweist, der sich von einer axial zum ersten Kammerzugang (11) weisenden Vorderseite des Ankers (20) bis zu einer rückwärtigen Hohlraummündung an einer dem ersten Kammerzugang (11) axial abgewandten Rückseite des Ankers (20) durch den Anker (30) erstreckt.

2. Elektromagnetisches Ventil nach dem vorhergehenden Aspekt, wobei sich durch das Schließelement (20) und den Anker (30) axial zusammenhängend ein einheitlicher Hohlraum (21, 31) erstreckt, der den Schließelement-Hohlraum (21) und den Anker-Hohlraum (31) umfasst.

3. Elektromagnetisches Ventil nach dem vorhergehenden Aspekt, wobei der einheitliche Hohlraum (21, 31) an der vorderen Hohlraummündung des Schließelements (20) in den ersten Kammerzugang (11) und an einer rückwärtigen Hohlraummündung in einen rückwärtigen Gehäuseraum (13) mündet, so dass der einheitliche Hohlraum (21, 31) den ersten Kammerzugang (11) mit dem rückwärtigen Gehäuseraum (13) verbindet.

4. Elektromagnetisches Ventil nach dem vorhergehenden Aspekt, wobei die rückwärtige Hohlraummündung an der Rückseite des Ankers (30) mündet.

5. Elektromagnetisches Ventil nach einem der vorhergehenden Aspekte, wobei das Schließelement (20) über Alles gemessen ein Gesamtvolumen aufweist und dieses Gesamtvolumen höchstens dem 4-fachen oder höchstens dem 3-fachen des Volumens des Schließelement-Hohlraums (21) entspricht.

6. Elektromagnetisches Ventil nach einem der vorhergehenden Aspekte, wobei der Anker (30) über Alles gemessen ein Gesamtvolumen aufweist und dieses Gesamtvolumen höchstens dem 5-fachen oder höchstens dem 4-fachen des Volumens des Anker-Hohlraums (31) entspricht.

7. Elektromagnetisches Ventil nach einem der vorhergehenden Aspekte, wobei das Schließelement (20) und der Anker (30) Bestandteil einer axial translatorischen Bewegungseinheit (20, 30) sind, die einen einheitlichen Hohlraum (21, 31) aufweist, der den Schließelement-Hohlraum (21) und/oder den Anker-Hohlraum (31) umfasst.

8. Elektromagnetisches Ventil nach dem vorhergehenden Aspekt, wobei sich der einheitliche Hohlraum (21, 31) von der vorderen Hohlraummündung des Schließelements (10) bis zu einer rückwärtigen Hohlraummündung an einer dem ersten Kammerzugang (11) axial abgewandten Rückseite der Bewegungseinheit (20, 30) durch die Bewegungseinheit (20, 30) erstreckt und den ersten Kammerzugang (11) mit einem rückwärtigen Gehäuseraum (13) an der Rückseite der Bewegungseinheit (20, 30) verbindet.

9. Elektromagnetisches Ventil nach dem vorhergehenden Aspekt, wobei die Bewegungseinheit (20, 30) über Alles gemessen ein Gesamtvolumen und im Gesamtvolumen den Einheitshohlraum (21, 31) aufweist und das Gesamtvolumen höchstens dem 5-fachen oder höchstens dem 4-fachen des Volumens des einheitlichen Hohlraums (21, 31) entspricht.

10. Elektromagnetisches Ventil nach einem der vorhergehenden Aspekte, wobei der Anker (30) die rückwärtige Hohlraummündung aufweist.

11. Elektromagnetisches Ventil nach einem der vier unmittelbar vorhergehenden Aspekte, wobei die Bewegungseinheit (20, 30) in Bezug auf axialen Fluiddruck ausgeglichen ist.

12. Elektromagnetisches Ventil nach einem der fünf unmittelbar vorhergehenden Aspekte, wobei das Schließelement (20) und der Anker (30) gemeinsam die Bewegungseinheit (20, 30) bilden.

13. Elektromagnetisches Ventil nach einem der vorhergehenden Aspekte, wobei das Schließelement (20) einen Innenumfang hat, der den Schließelement-Hohlraum (21) umgibt und sich über die gesamte Länge des Schließelement-Hohlraums (21) zylindrisch glatt in axialer Richtung erstreckt.

14. Elektromagnetisches Ventil nach einem der vorhergehenden Aspekte, wobei der Schließelement-Hohlraum (21) über seine gesamte Länge zylindrisch ist und den gleichen Querschnitt aufweist.

15. Elektromagnetisches Ventil nach einem der vorhergehenden Aspekte, wobei der Anker (30) einen Innenumfang hat, der den Anker-Hohlraum (31) umgibt und sich zumindest über den überwiegenden Teil der axialen Länge des Ankers (30) zylindrisch glatt in axialer Richtung erstreckt.

16. Elektromagnetisches Ventil nach einem der vorhergehenden Aspekte, wobei das Schließelement (20) und/oder der Anker (30) hülsenförmig ist oder sind.

17. Elektromagnetisches Ventil nach einem der vorhergehenden Aspekte, wobei das Schließelement (20) einen den Schließelement-Hohlraum (21) umgebenden Mantel aufweist und der Schließelement-Hohlraum (21) in jedem Querschnitt des Schließelements (20) eine kleinste radiale Weite ($d_S$) aufweist, die wenigstens zweimal oder wenigstens dreimal so groß wie eine größte Wandstärke des umgebenden Mantels im gleichen Querschnitt des Schließelements (20) ist.

18. Elektromagnetisches Ventil nach einem der vorhergehenden Aspekte, wobei der Anker (30) einen den Anker-Hohlraum (31) umgebenden Mantel aufweist und der Anker-Hohlraum (31) in jedem Querschnitt des Ankers (30) eine kleinste radiale Weite ($d_A$) aufweist, die größer, vorzugsweise um wenigstens 50% größer als eine größte Wandstärke des umgebenden Mantels im gleichen Querschnitt des Ankers (30) ist.

19. Elektromagnetisches Ventil nach einem der vorhergehenden Aspekte, wobei sich der Anker-Hohlraum (31) in einem rückwärtigen Hohlraumabschnitt (32) in Richtung auf die rückwärtige Hohlraummündung radial, beispielsweise konisch, weitet.

20. Elektromagnetisches Ventil nach dem vorhergehenden Aspekt, wobei sich der Anker-Hohlraum (31) bis in die rückwärtige Hohlraummündung radial weitet.

21. Elektromagnetisches Ventil nach einem der zwei unmittelbar vorhergehenden Aspekte, wobei sich der Anker-Hohlraum (31) über die Länge des rückwärtigen Hohlraumabschnitts (32) bis zur rückwärtigen Hohlraummündung kontinuierlich trichterförmig, beispielsweise konisch, weitet.

22. Elektromagnetisches Ventil nach einem der drei unmittelbar vorhergehenden Aspekte, wobei sich der Anker-Hohlraum (31) über eine Länge von wenigstens 10% der Gesamtlänge des Ankers (30) weitet.

23. Elektromagnetisches Ventil nach einem der vier unmittelbar vorhergehenden Aspekte, wobei sich der Anker-Hohlraum (31) auf einen größten Hohlraumquerschnitt weitet und der Anker (30) axial auf der Höhe des größten Hohlraumquerschnitts einen Außenumfang mit einem Außenumfangsquerschnitt aufweist, der höchstens um den Faktor 1,5 größer als der größte Hohlraumquerschnitt ist.

24. Elektromagnetisches Ventil nach einem der vorhergehenden Aspekte, wobei der erste Kammerzugang (11) axial auf der Höhe des Ventilsitzes (4) eine durchströmbare Querschnittsfläche hat, die der Größe nach einer Kreisfläche mit dem Durchmesser K entspricht, und das Schließelement (20) bei einer Bewegung aus der Schließposition in die Freigabeposition einen Hub der Länge H ausführt, wobei gilt:

$$K \geq 3 \cdot H \text{ oder } K \geq 4 \cdot H.$$

25. Elektromagnetisches Ventil nach einem der vorhergehenden Aspekte, wobei die Freigabeposition eine durch Anschlagkontakt vorgegebene Endposition ist.

26. Elektromagnetisches Ventil nach einem der vorhergehenden Aspekte, wobei das Schließelement (20) und der Anker (30) Bestandteil einer axial translatorischen Bewegungseinheit (20, 30) und in der Bewegungseinheit (20, 30) durch einen axialen Anschlagkontakt, der in die Schließrichtung (X) und die Freigaberichtung (-X) wirkt, gekoppelt sind.

27. Elektromagnetisches Ventil nach einem der vorhergehenden Aspekte, wobei die Stellkraft den Anker (30) in Richtung auf das Schließelement (20), vorzugsweise unmittelbar gegen das Schließelement (20) drückt.

28. Elektromagnetisches Ventil nach einem der vorhergehenden Aspekte, umfassend eine Federeinrichtung (25) zur Erzeugung einer Federkraft, die der Stellkraft entgegen auf das Schließelement (20) wirkt.

29. Elektromagnetisches Ventil nach einem der vorhergehenden Aspekte, wobei die Stellkraft in Schließrichtung (X) und die Federkraft in Freigaberichtung (-X) auf das Schließelement (20) wirken.

30. Elektromagnetisches Ventil nach einem der zwei unmittelbar vorhergehenden Aspekte, wobei die Federkraft das Schließelement (20) und den Anker (30) in axialer Richtung aufeinander zu, vorzugsweise gegeneinander, drückt.

31. Elektromagnetisches Ventil nach einem der drei unmittelbar vorhergehenden Aspekte, wobei die Federeinrichtung (25) das Schließelement (20) umgibt.

32. Elektromagnetisches Ventil nach einem der vier unmittelbar vorhergehenden Aspekte, wobei die Federeinrichtung (25) am Schließelement (20) axial abgestützt ist.

33. Elektromagnetisches Ventil nach einem der fünf unmittelbar vorhergehenden Aspekte, wobei das Schließelement (20) eine Federabstützung (22) aus mehreren am Außenumfang des Schließelements (20) lokal nach außen vorragenden Stützelementen aufweist, an denen die Federeinrichtung (25) axial abgestützt ist.

34. Elektromagnetisches Ventil nach dem vorhergehenden Aspekt, wobei zwischen benachbarten Stützelementen in Umfangsrichtung jeweils eine Lücke verbleibt und die Stützelemente in einer axialen Sicht auf das Schließelement (20) eine Ringfläche definieren, die sich vom Außenumfang des Schließelements (20), von dem die Stützelemente vorragen, nach radial außen bis zu einem Hüllumfang erstreckt, der die Stützelemente einhüllt und dem Verlauf des Außenumfangs des Schließelements (20) folgt, und wobei die Ringfläche in der axialen Sicht wenigstens dreimal oder wenigstens viermal so groß wie die Summe der Flächen der Stützelemente ist.

35. Elektromagnetisches Ventil nach dem vorhergehenden Aspekt, wobei die Ringfläche eine Kreisringfläche ist.

36. Elektromagnetisches Ventil nach einem vorhergehenden Aspekte jeweils in Kombination mit Aspekt 28, wobei die Federeinrichtung (25) eine Schraubendruckfeder ist.

37. Elektromagnetisches Ventil nach einem der vorhergehenden Aspekte, wobei das Ventilgehäuse (1-15) für das Schließelement (20) eine axiale Schließelement-Gleitführung (2) bildet.

38. Elektromagnetisches Ventil nach dem vorhergehenden Aspekt, wobei die Ventilkammer (10) über die Schließelement-Gleitführung (2) abgedichtet ist.

39. Elektromagnetisches Ventil nach einem der vorhergehenden Aspekte, wobei das Ventilgehäuse (1-15) für den Anker (30) eine axiale Anker-Gleitführung (9) bildet.

40. Elektromagnetisches Ventil nach dem vorhergehenden Aspekt, wobei der Anker (30) und die Anker-Gleitführung (7) im Gleitkontakt einen Dichtspalt bilden.

41. Elektromagnetisches Ventil nach einem der zwei unmittelbar vorhergehenden Aspekte, wobei der Anker (30) eine Druckausgleichsöffnung (33) aufweist, die den Anker-Hohlraum (21) mit einem Ausgleichsraum (14) am Außenumfang des Ankers (30) verbindet.

42. Elektromagnetisches Ventil nach dem vorhergehenden Aspekt, wobei, der sich der Ausgleichsraum (14) ringförmig um den Anker (30) erstreckt.

43. Elektromagnetisches Ventil nach einem der zwei unmittelbar vorhergehenden Aspekte jeweils in Kombination mit Aspekt 37, wobei sich der Ausgleichsraum (14) axial zwischen der Schließelement-Gleitführung (2) und der Anker-Gleitführung (7) befindet.

44. Elektromagnetisches Ventil nach einem der fünf unmittelbar vorhergehenden Aspekte, wobei das Ventilgehäuse (1-15) eine Druckhülse (8) mit einem Führungsabschnitt umfasst, der die Anker-Gleitführung (7) bildet, und wobei die Druckhülse (8) einen rückwärtigen Gehäuseraum (13) abschließt, in den die rückwärtige Hohlraummündung des Ankers (30) mündet.

45. Elektromagnetisches Ventil nach dem vorhergehenden Aspekt, wobei das Ventilgehäuse (1-15) ein Ventilkammergehäuse (1) umfasst, das die Ventilkammer (10) umgibt und an einem Umfang den zweiten Kammerzugang (12) aufweist.

46. Elektromagnetisches Ventil nach einem der vorhergehenden Aspekte, wobei das Schließelement (20) über zumindest den überwiegenden Teil seiner Länge einen glattzylindrischen Außenumfang hat.

47. Elektromagnetisches Ventil nach einem der vorhergehenden Aspekte, wobei der Anker (30) über zumindest den überwiegenden Teil seiner Länge, vorzugsweise über seine gesamte Länge, einen glattzylindrischen Außenumfang hat.

48. Elektromagnetisches Ventil nach einem der vorhergehenden Aspekte, wobei das Ventilgehäuse (1-15) ein Ventilkammergehäuse (1) mit einem Mantelabschnitt aufweist, der die Ventilkammer (10) und den Ventilsitz (4) umgibt und an einem Umfang den zweiten Kammerzugang (12) aufweist.

49. Elektromagnetisches Ventil nach dem vorhergehenden Aspekt, wobei der Ventilsitz (4) in axialer Richtung ($\pm$X) zum zweiten Kammerzugang (12) um weniger als eine größte axiale Weite des zweiten Kammerzugangs (12) versetzt ist.

50. Elektromagnetisches Ventil nach einem der zwei unmittelbar vorhergehenden Aspekte, wobei der Mantelabschnitt einen stutzenartigen Ventilanschluss bildet.

51. Elektromagnetisches Ventil nach dem vorhergehenden Aspekt in Kombination mit Aspekt 28, wobei die Federeinrichtung (25) in axialer Richtung (X) an der Buchse (3) abgestützt ist.

52. Elektromagnetisches Ventil nach einem der vorhergehenden Aspekte, wobei das Schließelement (20) eine Schließfläche (24), mit der es in der Schließposition mit Dichtkontakt am Ventilsitz (4) anliegt, und in der Ventilkammer (10) am Außenumfang eine radiale Aufweitung (23) aufweist, die Schließfläche (24) in der Ventilkammer (10) in der Schließposition über den Ventilsitz (4) nach radial außen vorsteht und die Aufweitung (23) eine Ausgleichsfläche für den nach außen vorstehenden Teil der Schließfläche (24) bildet, um das Schließelement (20) in der Schließposition bezüglich der axialen Richtung (±X) im Druck auszugleichen.

53. Elektromagnetisches Ventil nach einem der vorhergehenden Aspekte, wobei das Schließelement (20) eine Schließfläche (24), mit der es in der Schließposition mit Dichtkontakt am Ventilsitz (4) anliegt, und in der Ventilkammer (10) am Außenumfang eine radiale Aufweitung (23) aufweist, mit der es in der Freigabeposition in die Freigaberichtung (-X) mit axialem Anschlagkontakt an einem Anschlag des Ventilgehäuses (1-15) anliegt, wodurch die Freigabeposition bestimmt wird.

54. Elektromagnetisches Ventil nach einem der vorhergehenden Aspekte, wobei das Ventilgehäuses (1-15) einen Anschlag (16) aufweist, an dem das Schließelement (20) in der Freigabeposition in die Freigaberichtung (-X) mit axialem Anschlagkontakt anliegt, wodurch die Freigabeposition bestimmt wird.

55. Elektromagnetisches Ventil nach dem vorhergehenden Aspekt in Kombination mit Aspekt 37, wobei sich das Ventilgehäuse (1-15) von der Schließelement-Gleitführung (2) in Schließrichtung (X) über eine Ringschulter in die Ventilkammer (10) weitet und die Ringschulter den Anschlag (16) bildet.

56. Elektromagnetisches Ventil nach einem der zwei unmittelbar vorhergehenden Aspekte, wobei die Federabstützung (22) nach Aspekt 33 und/oder die radiale Aufweitung (23) nach Aspekt 52 einen Gegenanschlag des Schließelements (20) bildet oder bilden.

57. Elektromagnetisches Ventil nach einem der vorhergehenden Aspekte, das als Sicherheitsventil (V) in einem Hydrauliksystem zur Unterstützung der Lenkung eines Fahrzeugs verwendet wird.

58. Hydrauliksystem zur Unterstützung der Lenkung eines Fahrzeugs, das Hydrauliksystem umfassend:

(a) einen Zylinder (40) mit einem ersten Zylinderanschluss und einem zweiten Zylinderanschluss,
(b) einen im Zylinder (40) axial zwischen den Zylinderanschlüssen angeordneten Kolben (41),
(c) und ein Ventil (V) nach einem der vorhergehenden Aspekte,
(d) wobei der erste Kammerzugang (11) mit dem ersten Zylinderanschluss und der zweite Kammerzugang (12) mit dem zweiten Zylinderanschluss verbunden sind, so dass der Kolben (41) über das Ventil (V) beidseitig mit dem gleichen Druck beaufschlagbar ist.

59. Hydrauliksystem nach dem vorhergehenden Aspekt, umfassend eine Pumpe (41), die mit dem ersten Zylinderraum und dem zweiten Zylinderraum verbunden und dazu eingerichtet ist, selektiv den ersten Zylinderraum und den zweiten Zylinderraum mit einem hydraulischen Druck zu beaufschlagen, wobei das Ventil (V) und die Pumpe in Parallelschaltung angeordnet sind.

Nachfolgend wird ein Ausführungsbeispiel der Erfindung anhand von Figuren erläutert. Am Ausführungsbeispiel offenbar werdende Merkmale bilden jeweils einzeln und in jeder Kombination die Gegenstände der Ansprüche und Aspekte und auch die vorstehend darüber hinaus erläuterten Ausgestaltungen und vorteilhaft weiter. Es zeigen:

Figur 1    ein elektromagnetisches Ventil in einer Isometrie,
Figur 2    das Ventil in einer Seitenansicht,
Figur 3    das Ventil in einem Längsschnitt,
Figur 4    ein Schließelement des Ventils in einer Isometrie,
Figur 5    das Schließelement in einem Längsschnitt,
Figur 6    einen Anker des Ventils in einem Längsschnitt, und
Figur 7    ein hydraulisch unterstütztes Lenksystem eines Fahrzeugs.

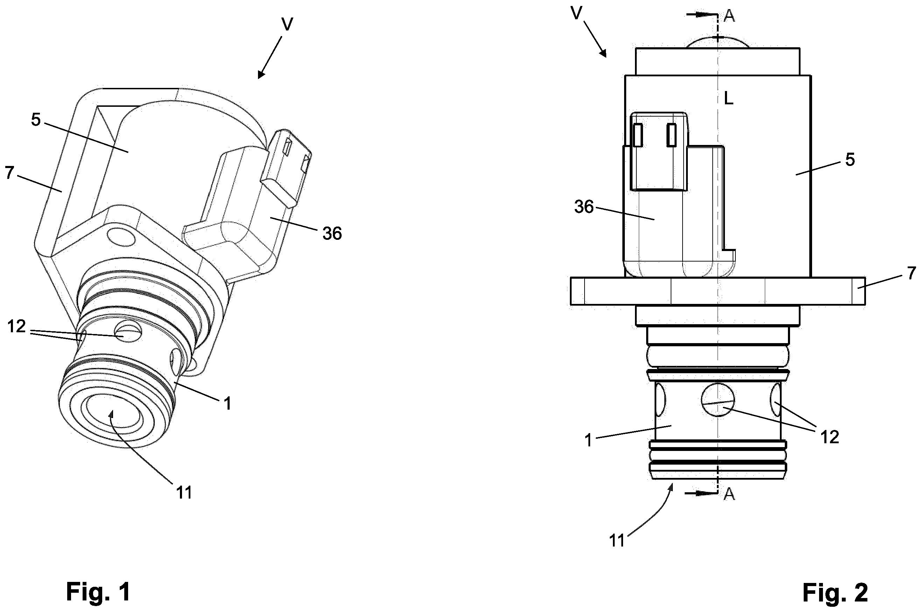

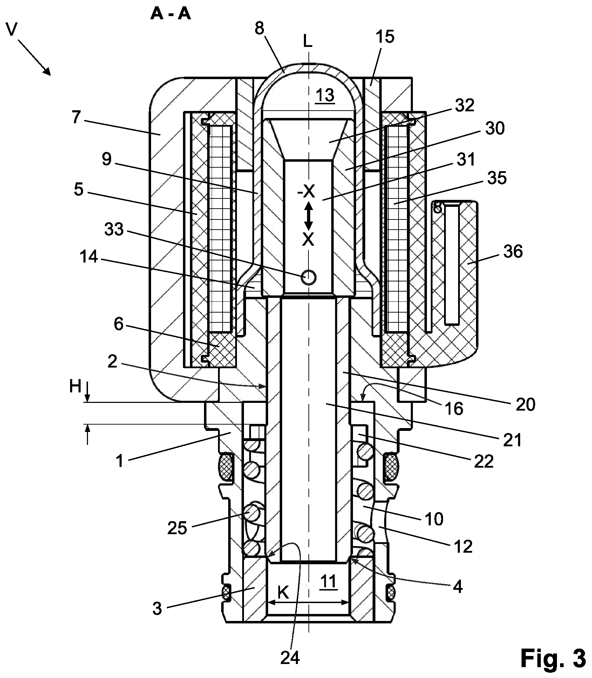

Die Figuren 1 bis 3 zeigen ein Ausführungsbeispiel eines erfindungsgemäßen Ventils V in einer Isometrie, einer Seitenansicht und einem Längsschnitt. Die Längsschnittebene A-A der Figur 3 ist in Figur 2 eingetragen. Das Ventil V umfasst ein mehrteiliges Ventilgehäuse, von dem in den Figuren 1 und 2 ein Ventilkammergehäuse 1, ein Spulengehäuse 5 und ein Bügel 7 erkennbar sind. Der Bügel 7 ist mit dem Ventilkammergehäuse 1 fest gefügt. Er umgreift das Spulengehäuse 5 und verbindet dadurch das Spulengehäuse 5 unbeweglich mit dem Ventilkammergehäuse 1, beispielsweise durch Klemmung, um das Ventilgehäuse als eine Montageeinheit zu bilden. Erkennbar ist ferner ein am Spulengehäuse 5 geformter Spulenanschluss 36.

Das Ventilkammergehäuse 1 ragt vom Spulengehäuse 5 und dem Bügel 7 axial, d. h. parallel zu einer Ventilachse L des Ventils V, vor. Das Ventilkammergehäuse 1 bildet einen hydraulischen Fluidanschluss in der Art eines Anschlussstutzens. Dieser Anschlussstutzen umgibt einen axial erstreckten ersten Kammerzugang 11, der an einem vorderen Stirnende des Ventilkammergehäuses 1 mündet, und mehrere zweite Kammerzugänge 12, die am Umfang des Anschlussstutzens in Umfangsrichtung voneinander beabstandet angeordnet sind.

Das Ventil V ist ein elektromagnetisches Sitzventil. Es umfasst ein Schließelement 20, das im Ventilgehäuse, insbesondere im Ventilkammergehäuse 1, längs der Ventilachse L in eine axiale Schließrichtung X und eine axiale Freigaberichtung -X zwischen einer Schließposition und einer Freigabeposition hin und her beweglich ist. Die Schließposition wird durch Anschlag- und Dichtkontakt des Schließelements 20 mit einem Ventilsitz 4 und die Freigabeposition wird durch Anschlagkontakt des Schließelements 20 mit einem rückwärtigen Anschlag 16 des Ventilgehäuses bestimmt.

In Figur 3 nimmt das Schließelement 20 die Schließposition ein, in der es im Dichtkontakt am Ventilsitz 4 des Ventilgehäuses anliegt und den ersten Kammerzugang 11 von den zweiten Kammerzugängen 12 trennt. Ein elektromagnetischer Aktuator, der einen in axialer Richtung hin und her beweglichen Anker 30 und eine Spule 35 umfasst, erzeugt eine Stellkraft, die über den Anker 30 in Schließrichtung X auf das Schließelement 20 wirkt. Eine Federeinrichtung 25 erzeugt eine Federkraft, die der Stellkraft entgegen in Freigaberichtung - X wirkt. Im Normalbetrieb ist die Stellkraft größer als die Federkraft und hält das Schließelement 20 gegen die permanent wirkende Federkraft in der Schließposition. Wird die Stellkraft um ein entsprechendes Maß verringert oder fällt die Stellkraft gänzlich weg, beispielsweise bei Stromausfall, steuert das Ventil V aus dem Schließzustand in den Freigabezustand um. Dabei hebt das Schließelement 20 vom Ventilsitz 4 ab und bewegt sich in die Freigaberichtung -X bis in die Freigabeposition. Im Verlaufe dieser Freigabebewegung und insbesondere in der Freigabeposition gibt das Schließelement 20 einen vom Fluid durchströmbaren Verbindungsquerschnitt frei, über den der erste Kammerzugang 11 dann mit den zweiten Kammerzugängen 12 verbunden ist. In der Schließposition schließt das Schließelement 20 diesen Verbindungsquerschnitt und trennt dadurch den ersten Kammerzugang 11 von den zweiten Kammerzugängen 12.

Das Schließelement 20 und der Anker 30 sind durch einen axialen Anschlagkontakt gekoppelt. Im Anschlagkontakt drückt die Stellkraft den Anker 30 in Schließrichtung X gegen das Schließelement 20 und die Federkraft drückt das Schließelement 20 in Freigaberichtung -X gegen den Anker 30. Aufgrund dieser Kopplung führen das Schließelement 20 und der Anker 30 axiale Bewegungen gemeinsam aus und bilden somit eine axial translatorische Bewegungseinheit.

Das Ventilkammergehäuse 1 umgibt eine Ventilkammer 10, die sich ringförmig um das Schließelement 20 erstreckt. Das Ventilkammergehäuse 1 bildet somit eine äußere Umfangswand und das Schließelement 20 bildet eine innere Umfangswand der Ventilkammer 10. Die zweiten Kammerzugänge 12 münden am Umfang des Ventilkammergehäuses 1 seitlich, beispielsweise radial, in die Ventilkammer 10. Sie können mit der Ventilkammer 10 ständig verbunden sein. In der Schließposition trennt das Schließelement 20 die Ventilkammer 10 vom ersten Kammerzugang 11. Wenn das Schließelement 20 die Freigabeposition einnimmt, also vom Ventilsitz 4 abgehoben hat, mündet der erste Kammerzugang 11 axial über den Ventilsitz 4 in die Ventilkammer 10.

Das Ventilkammergehäuse 1 umgibt einen rückwärtigen Axialabschnitt des Schließelements 20 und bildet dort eine Schließelement-Gleitführung 2, die das Schließelement 20 in einem Gleitkontakt axial führt. Das Schließelement 20 und die Schließelement-Gleitführung 2 bilden im Gleitkontakt einen Dichtspalt, über den die Ventilkammer 10 abgedichtet ist. Das Ventilkammergehäuse 1 weitet sich von der Schließelement-Gleitführung 2 in die in Schließrichtung X anschließende Ventilkammer 10 über eine Ringschulter nach radial außen auf. Die Ringschulter bildet den Anschlag 16 für die Freigabeposition.

Der Ventilsitz 4 wird von einer Buchse 3 gebildet, die in einen vorderen Endabschnitt des Ventilkammergehäuses 1 eingesetzt ist. Die Buchse 3 ist mit dem Ventilkammergehäuse 1 unbeweglich gefügt, beispielsweise in den vorderen Endabschnitt des Ventilkammergehäuses 1 eingepresst. Die Buchse 3 bildet die Umfangswand des ersten Kammerzugangs 11, so dass der Innenumfang der Buchse 3 den Querschnitt des ersten Kammerzugangs 11 bestimmt. Der Ventilsitz 4 läuft an dem der Ventilkammer 10 axial zugewandten rückwärtigen Stirnende der Buchse 3 um die Ventilachse L endlos um. Das Schließelement 20 weist an seinem der Buchse 3 und dem ersten Kammerzugang 11 axial zugewandten vorderen Stirnende eine Schließfläche 24 auf, mit der das Schließelement 20 in der Schließposition im Dichtkontakt mit dem Ventilsitz 4 ist. In vorteilhaften Ausführungen laufen der Ventilsitz 4 und die Schließfläche 24 und damit auch der Dichtkontakt um die Ventilachse L unterbrechungsfrei um und sperren im Schließzustand jeglichen Durchfluss.

Die Federeinrichtung 25 ist in der Ventilkammer 10 angeordnet und umgibt das Schließelement 20. Die Federeinrichtung 25 stützt sich in Schließrichtung X an einer Gehäuseabstützung, im Ausführungsbeispiel an der Buchse 3, und in Freigaberichtung -X an einer Federabstützung 22 des Schließelements 20 ab. Die Federeinrichtung 25 ist zwischen der Gehäuseabstützung und der Federabstützung 22 axial auf Druck gespannt. Im Ausführungsbeispiel ist die Federeinrichtung 25 eine Schraubendruckfeder.

Der Bügel 7 umgreift das Spulengehäuse 5, so dass dieses axial zwischen einem vorderen Schenkel und einem rückwärtigen Schenkel des Bügels 7 aufgenommen ist. Das Spulengehäuse 5 umgibt die Spule 35, die wiederum ein weiteres, inneres Spulengehäuse 6 umgibt. Die beiden Spulengehäuse 5 und 6 umschließen die Spule 35 fluiddicht. Die Spule 35 ist über den Spulenanschluss 36 an eine Stromversorgung anschließbar. Der Spulenanschluss 36 ist unmittelbar am Spulengehäuse 5 außen geformt.

Das Ventilkammergehäuse 1 durchragt den vorderen Schenkel des Bügels 7, der hierfür einen der Größe und Form nach angepasstem Durchgang aufweist. Das Ventilkammergehäuse 1 ist mit dem Bügel 7 im Bereich des Durchgangs unbeweglich gefügt, beispielsweise mittels Schraubverbindung. Im gefügten Zustand drückt der rückwärtige Schenkel des Bügels 7 die Spulengehäuse 5 und 6 mit einer gewissen axialen Klemmkraft gegen eine Schulterfläche des Ventilkammergehäuses 1 und/oder den vorderen Schenkel des Bügels 7.

Das Ventilgehäuse bildet eine Anker-Gleitführung 9, die den Anker 30 in einem Gleitkontakt axial führt. Hierfür umfasst das Ventilgehäuse eine Druckhülse 8 mit einem hülsenförmigen Führungsabschnitt, der den Anker 30 im Gleitkontakt umgibt und damit die Anker-Gleitführung 9 bildet. Die Druckhülse 8 umfasst ferner einen rückwärtigen Abschnitt, der sich in Freigaberichtung -X an den hülsenförmigen Führungsabschnitt anschließt und diesen stirnseitig verschließt, so dass an der Rückseite des Ankers 30 ein rückwärtiger Gehäuseraum 13 gebildet wird. Die Druckhülse 8 verbreitert sich in Schließrichtung X an die Anker-Gleitführung 9 anschließend in einem vorderen Fügeabschnitt und umgibt mit ihrem ebenfalls hülsenförmigen Fügeabschnitt einen rückwärtigen Endabschnitt des Ventilkammergehäuses 1. In diesem Bereich sind das Ventilkammergehäuse 1 und die Druckhülse 8 unbeweglich und fluiddicht miteinander gefügt. Die Druckhülse 8 kann durch Tiefen oder Tiefziehen in einem Stück, beispielsweise aus Stahl, insbesondere Edelstahl, geformt sein. Sie schirmt das Spulengehäuse 5, 6 und damit die Spule 35 vom Fluid, insbesondere von gegebenenfalls hohen Fluiddrücken, ab.

Der rückwärtige Schenkel des Bügels 7 weist einen axialen Durchgang auf, in den eine Hülse 15 eingesetzt ist. Die Hülse 15 dient der Halterung der Druckhülse 8 und damit letztlich ebenfalls der Führung des Ankers 30.

Ein am Außenumfang des Ankers 30 vorhandener Ausgleichsraum 14 ist über eine Druckausgleichsöffnung 33 des Ankers 30 mit dem Anker-Hohlraum 31 verbunden. Im Ausführungsbeispiel umgibt die Druckhülse 8 den Ausgleichsraum 14. Der Ausgleichsraum 14 wird im Ausführungsbeispiel radial innen unmittelbar vom Anker 30 und radial außen unmittelbar von der Druckhülse 8 begrenzt. Der Ausgleichsraum 14 ist in jeder Position des Schließelements 20 über die Druckausgleichsöffnung 33 und den Anker-Hohlraum 31 mit dem rückwärtigen Gehäuseraum 13 verbunden.

Das Schließelement 20 kann in der Schließposition in Freigaberichtung -X über das Ventilkammergehäuse 1 axial vorragen und den Anker 30 aufgrund des Anschlagkontakts vom Ventilkammergehäuse 1 in axialer Richtung freistellen, so dass der Anker 30 auch in der Schließposition keinen axialen Kontakt mit dem Ventilkammergehäuse 1 hat.

Das Ventil V ist auf eine kurze Schaltzeit ausgelegt. Als Schaltzeit wird die Zeitdauer verstanden, die vergeht, bis das Ventil V bei Wegfall der Stellkraft von Sperrung auf Durchfluss umgesteuert hat. Als Maß für die Schaltzeit kann die Zeitdauer verwendet werden, die vergeht, bis sich das Schließelement 20 aus der Schließposition in die Freigabeposition bewegt und somit den vollen Verbindungsquerschnitt freigegeben, der Verbindungsquerschnitt also eine Nominalgröße erreicht hat. Zur Reduzierung der Schaltzeit sind das Schließelement 20 und der Anker 30 als Hohlkörper ausgeführt, indem sich in axialer Richtung durch das Schließelement 20 ein Schließelement-Hohlraum 21 und durch den Anker 30 ein Anker-Hohlraum 31 erstrecken. Der Schließelement-Hohlraum 21 und der Anker-Hohlraum 31 erstrecken sich axial zusammenhängend, als ein einziger Durchgang, durch die gesamte Bewegungseinheit aus Schließelement 20 und Anker 30. Der Schließelement-Hohlraum 21 mündet an einer vorderen Hohlraummündung des Schließelements 20 in den ersten Kammerzugang 11 und an einer rückwärtigen Hohlraummündung des Ankers 30 in den rückwärtigen Gehäuseraum 13, der im Ventilgehäuse an der Rückseite des Ankers 30 gebildet ist und in den die Bewegungseinheit 20, 30 bei einer Bewegung in die Freigaberichtung -X einfährt.

Im Sinne einer kurzen Schaltzeit ist es, wenn sich der durch das Schließelement 20 in der Schließposition verschlossene Verbindungsquerschnitt zwischen der Ventilkammer 10 und dem ersten Kammerzugang 11 rasch vergrößert, wenn sich das Schließelement 20 in die Freigaberichtung -X bewegt. Mit H ist die Länge des axialen Hubs bezeichnet, den das Schließelement 20 bei der Bewegung aus der Schließposition in die Freigabeposition zurücklegt. Um eine rasche Vergrößerung des Verbindungsquerschnitts und in der Freigabeposition einen großen Verbindungs- bzw. Freigabequerschnitt bei kleiner Hublänge H zu erhalten, weist der erste Kammerzugang 11 axial auf der Höhe des Dichtkontakts von Schließelement 20 und Ventilsitz 4 einen großen Querschnitt auf. Im Ausführungsbeispiel ist der Kammerzugang 11 kreiszylindrisch und der Querschnitt axial auf der Höhe des Dichtkontakts ist kreisförmig mit einem Durchmesser K. Vorteilhaft ist, wenn der Durchmesser K wenigstens dreimal, besser wenigstens viermal so groß wie die Hublänge H ist.

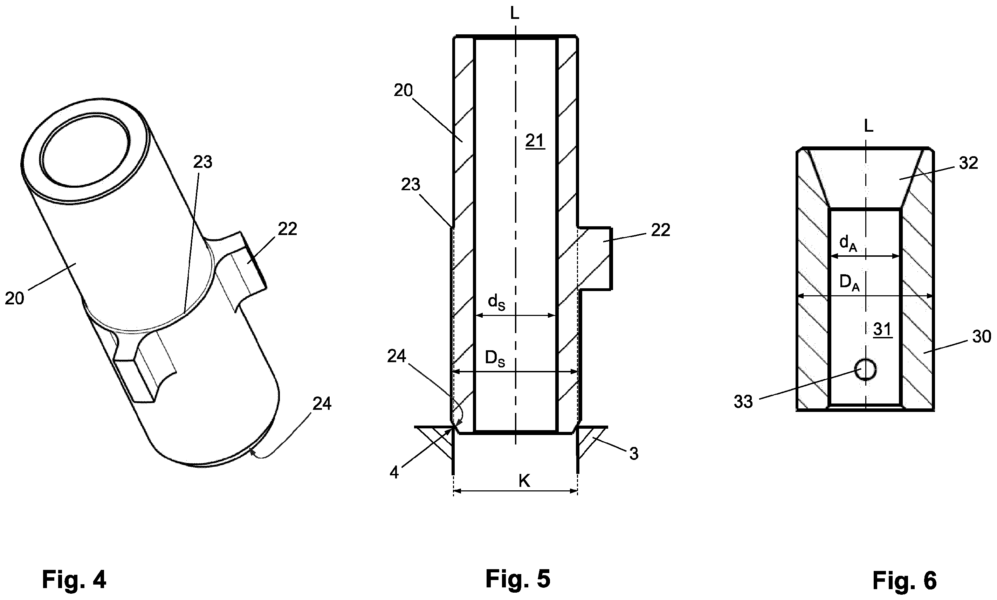

Die Figuren 4 und 5 zeigen das Schließelement 20 einzeln in einer Isometrie und einem Längsschnitt, in dem sich die Ventilachse L erstreckt. Das Schließelement 20 ist insgesamt hülsenförmig und weist über seine gesamte Länge eine im Vergleich mit Schließelementen herkömmlicher Sitzventile geringe Wandstärke auf. Sein Innenumfang und dementsprechend der Schließelement-Hohlraum 21 erstreckt sich glattzylindrisch in axialer Richtung durch das Schließelement 20, weist also über die gesamte Länge den gleichen Querschnitt auf. Optionale Abfasungen an den stirnseitigen Mündungen werden in Bezug auf die Charakterisierung als "über die gesamte Länge zylindrisch" vernachlässigt.

Am Außenumfang weitet sich das Schließelement 20 über eine Aufweitung 23 geringförmig auf, wobei die Aufweitung 23 um die Ventilachse L endlos umläuft. Im Ergebnis weist das Schließelement 20 einen rückwärtigen Hülsenabschnitt mit einer umlaufend und in axialer Richtung konstanten Wandstärke und hieran in Schließrichtung X anschließend einen vorderen Hülsenabschnitt ebenfalls mit einer umlaufend und in axialer Richtung konstanten Wandstärke auf, die geringfügig größer als die Wandstärke des rückwärtigen Hülsenabschnitts ist. Die Aufweitung 23 ist als radial schlanke Ringschulter gebildet. Die Aufweitung 23 ist so bemessen, dass das Fluid keine resultierende Axialkraft auf das Schließelement 20 ausübt, wenn das Schließelement 20 die Schließposition einnimmt. Wie insbesondere im Längsschnitt der Figur 5 erkennbar, ist die Schließfläche 24 konisch und steht in der Schließposition geringfügig nach radial außen über den unmittelbaren Dichtkontakt mit dem Ventilsitz 4 vor. Genau dieser geringe radiale Überstand wird durch die Aufweitung 23 ausgeglichen. Dies soll durch die zwei gepunkteten Linien, die den Außenumfang des rückwärtigen Hülsenabschnitts axial über den Ventilsitz 4 hinaus verlängern, veranschaulicht werden.

Die Freigabeposition des Schließelements 20 kann durch axialen Anschlagkontakt der Federabstützung 22 und/oder der Aufweitung 23 am Anschlag 16 des Ventilgehäuses (Figur 3) bestimmt werden. Die Hublänge H kann daher dem axialen Abstand zwischen dem Anschlag 16 und der Federabstützung 22 oder der Aufweitung 23 entsprechen.

Das Schließelement 20 ist im Ausführungsbeispiel, von der Federabstützung 22 abgesehen, über den Außenumfang kreiszylindrisch und weist im vorderen Hülsenabschnitt, der die Schließfläche 24 bildet, den Außendurchmesser $D_S$ auf. Der Schließelement-Hohlraum 21 ist ebenfalls kreiszylindrisch. Das Schließelement 20 weist über seinen Innenumfang überall den Innendurchmesser $d_S$ auf. Für das Durchmesserverhältnis gilt vorteilhafterweise $D_S \leq 2 \cdot d_S$. Der Innendurchmesser $d_S$ ist somit deutlich größer als die Wandstärke im aufgeweiteten vorderen Hülsenabschnitt des Schließelements 20. Im Ausführungsbeispiel gilt $D_S / d_S = 4/3$.

Verallgemeinert auf beliebige andere, aber zumindest im Wesentlichen nach wie vor hülsenartige Schließelemente gilt vorteilhafterweise, dass das über Alles gemessene Gesamtvolumen des Schließelements 20 vorteilhafterweise höchstens dem Vierfachen des Volumens des Schließelement-Hohlraums 21 und, noch vorteilhafter, höchstens dem Dreifachen des Volumens des Schließelement-Hohlraums 21 entspricht. In Bezug auf das Verhältnis eines beliebig geformten Schließelement-Hohlraums 21 zur Wandstärke können der Innendurchmesser $d_S$ durch eine kleinste radiale Weite im jeweiligen Querschnitt des Schließelements 20 und die Wandstärke durch eine größte Wandstärke des umgebenden Mantels des Schließelements 20 im gleichen Querschnitt ersetzt werden. In der Verallgemeinerung ist es vorteilhaft, wenn der Schließelement-Hohlraum 21 über seine gesamte Länge im jeweiligen Querschnitt eine kleinste radiale Weite aufweist, die wenigstens zweimal oder wenigstens dreimal so groß wie eine größte Wandstärke des umgebenden Mantels im gleichen Querschnitt ist.

Die Federabstützung 22 wird durch mehrere Stützelemente gebildet, die flügelartig am Außenumfang des Schließelements 20 nach radial außen vorragen. Die Stützelemente sind in Umfangsrichtung jeweils schlank, so dass die durch die Stützelemente erhaltene Federabstützung 22 in der Ventilkammer (Figur 3) der Axialbewegung des Schließelements 20 nur einen geringen Strömungswiderstand entgegensetzt. Auch diese Maßnahme trägt zur Reduzierung der Schaltzeit bei. Die Lücken, die in Umfangsrichtung zwischen den Stützelementen verbleiben, weisen in Umfangsrichtung gemessen in der Summe eine größere Erstreckung als die Federabstützung 22 auf. Die Stützelemente bilden gemeinsam eine Widerstandsfläche, die axialen Bewegungen einen Strömungswiderstand entgegensetzt. Diese Widerstandsfläche ist Teil einer virtuellen Ringfläche, die sich in einer axialen Sicht auf eine der beiden Stirnseiten des Schließelements 20 um den zwischen den Stützelementen verbleibenden zylindrischen Teil des Außenumfangs des Schließelements 20 erstreckt und radial innen von diesem Außenumfang des Schließelements 20 und radial außen von einem die Stützelemente einhüllenden Hüllumfang, vorzugsweise ein Hüllkreis, begrenzt wird. Zur Reduzierung des Strömungswiderstands, den die Federabstützung 22 erzeugt, ist es vorteilhaft, wenn die in den Lücken zwischen den Stützelementen freibleibenden Flächenbereiche der virtuellen Ringfläche gemeinsam wenigstens zweimal oder wenigstens dreimal größer als die Widerstandsfläche der Stützelemente ist. Je kleiner in der axialen Sicht die Widerstandsfläche im Verhältnis zur Fläche der Lücken ist, desto kleiner ist auch der durch die Federabstützung 22 verursachte Strömungswiderstand.

Figur 6 zeigt den Anker 30 in einem Längsschnitt, in dem sich die Ventilachse L erstreckt. Der Anker 30 weist über seine gesamte axiale Länge einen glattzylindrischen Außenumfang auf, also einen Außenumfang mit überall gleichem Querschnitt. Stirnseitige Abfasungen seien hierbei vernachlässigt. Der Anker 30 weist über den überwiegenden Teil seiner Länge auch einen glattzylindrischen Innenumfang auf, der den Anker-Hohlraum 31 über dessen Umfang begrenzt. Allerdings weitet sich der Anker-Hohlraum 31 in einem rückwärtigen Hohlraumabschnitt in Richtung auf die rückwärtige Hohlraummündung unter Ausbildung einer Aufweitung 32 auf.

Im Ausführungsbeispiel ist der Anker 30 über seinen Außenumfang und im vorderen Axialabschnitt auch über den Innenumfang kreiszylindrisch. Bezeichnet man den Außendurchmesser des Ankers 30 mit $D_A$, und den Innendurchmesser des zylindrischen Axialabschnitts des Anker-Hohlraums 31 mit $d_A$, gilt in vorteilhaften Ausführungen $D_A \leq 4 \cdot d_A$, oder, noch vorteilhafter, $D_A \leq 3 \cdot d_A$. Im Ausführungsbeispiel gilt für das Durchmesserverhältnis $D_A / d_A = 2/1$. Obgleich der Anker 30 zur Erzeugung einer ausreichend großen Stellkraft über den zylindrischen Axialabschnitt des Anker-Hohlraums 31 eine größere Wandstärke als das Schließelement 20 aufweist, ist der Innendurchmesser $d_A$ über die Länge des zylindrischen Abschnitts des Anker-Hohlraums 31 immer noch größer als die Wandstärke im gleichen Ankerabschnitt.

Verallgemeinert auf beliebige andere, aber zumindest im Wesentlichen nach wie vor hülsenartige Ankerformen gilt vorteilhafterweise, dass das über Alles gemessene Gesamtvolumen des Ankers 30 in vorteilhaften Ausführungen höchstens dem Fünffachen des Volumens des Anker-Hohlraums 31 und, noch vorteilhafter, höchstens dem Vierfachen des Volumens des Anker-Hohlraums 21 entspricht. In Bezug auf das Verhältnis eines beliebig geformten Anker-Hohlraums 31 zur Wandstärke können der Innendurchmesser $d_A$ durch eine kleinste radiale Weite im jeweiligen Querschnitt des Ankers 30 und die Wandstärke durch eine größte Wandstärke des umgebenden Mantels des Ankers 30 im gleichen Querschnitt ersetzt werden. In der Verallgemeinerung ist es vorteilhaft, wenn der Anker-Hohlraum 31 über seine gesamte Länge im jeweiligen Querschnitt eine kleinste radiale Weite aufweist, die größer als eine größte Wandstärke des umgebenden Mantels im gleichen Querschnitt des Ankers 30 ist. Vorteilhafterweise ist sie um wenigstens 50% größer.

Die Aufweitung 32 im rückwärtigen Abschnitt des Anker-Hohlraums 31 ist trichterförmig. Sie kann beispielsweise trompetenförmig oder, wie im Ausführungsbeispiel, zweckmäßigerweise konisch sein. Im rückwärtigen Hohlraumabschnitt vergrößert sich der Querschnitt des Ankers-Hohlraums 31 kontinuierlich bis unmittelbar zur rückwärtigen Hohlraummündung. Der Anker-Hohlraum 31 weitet sich somit kontinuierlich trichterförmig in den hinteren Gehäuseraum 13 auf (Figur 3). Durch die Aufweitung 32 wird die Verdrängung des Fluids aus dem rückwärtigen Gehäuseraum 13 in den Anker-Hohlraum 31 erleichtert und somit ein Widerstand verringert, den das im rückwärtigen Gehäuseraum 13 befindliche Fluid der Bewegung des Ankers 30 in die Freigaberichtung -X entgegensetzt. Durch die Aufweitung 32 wird zudem die Masse des Ankers 30 reduziert und somit bei gegebener Federkraft die Beschleunigung der Bewegungseinheit aus Schließelement 20 und Anker 30 beim Umsteuern erhöht. Die Aufweitung 32 erstreckt sich vorteilhafterweise über mehr als 10% oder 15% der Gesamtlänge des Ankers 30. Im Ausführungsbeispiel erstreckt sie sich über gut 20% der Gesamtlänge des Ankers 30. Unmittelbar an der rückwärtigen Hohlraummündung hat der Anker 30 seine geringste Wandstärke, die dort weniger als die Hälfte der Wandstärke im zylindrischen Abschnitt des Anker-Hohlraums 31 beträgt.

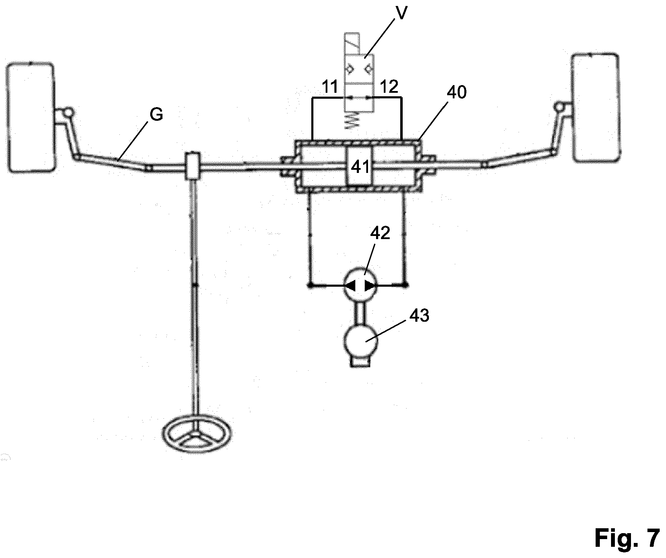

Figur 7 zeigt ein Verwendungsbeispiel für das Ventil V. Das Ventil V dient im Verwendungsbeispiel als Back-Up Ventil in einem System zur hydraulischen Unterstützung einer Fahrzeuglenkung. Vom Fahrzeug sind nur zwei über ein Lenkgestänge gekoppelte Räder, beispielsweise die Vorderräder eines Automobils, dargestellt. Die vom Fahrer an einem Lenkorgan des Fahrzeugs, beispielsweise einem Lenkrad, ausgeübten Lenkbewegungen werden durch das Gestänge auf die Achsen der beiden Räder übertragen. Im Übertragungsweg des Lenkgestänges ist eine doppeltwirkende Kolben-Zylinder-Anordnung angeordnet. Die Kolben-Zylinder-Anordnung umfasst einen Zylinder 40, in dem ein Kolben 41 translatorisch hin und her beweglich ist. Der Kolben 41 trennt im Zylinder 40 einen ersten, in Figur 7 linken Zylinderraum von einem zweiten, in Figur 7 rechten Zylinderraum. Die beiden Zylinderräume sind über jeweils einen Anschluss mit einer Hydraulikpumpe 42 verbunden, die von einem Motor 43 angetrieben wird. Die beiden Zylinderräume sind mittels der Pumpe 42 selektiv mit einem hydraulischen Fluid beaufschlagbar, um den Kolben 41 den Lenkbewegungen entsprechend mit hydraulischem Druck zu beaufschlagen und dadurch die Lenkbewegungen zu unterstützen.

Das Ventil V dient dazu, die beiden Zylinderräume in bestimmten Störfällen, beispielsweise einem vollständigen Stromausfall, zu verbinden, also zwischen den Zylinderräumen einen Kurzschluss herzustellen. Zur Erfüllung dieser Sicherheitsfunktion ist das Ventil V zur Pumpe 42 hydraulisch parallelgeschaltet. Es ist über seinen ersten Kammerzugang 11 mit dem ersten Zylinderraum und über seine zweiten Kammerzugänge 12 mit dem zweiten Zylinderraum permanent verbunden. Im Normalbetrieb befindet sich das Ventil V im Schließzustand, in dem das Schließelement 20 die Schließposition einnimmt und den Kammerzugang 11 von den Kammerzugängen 12 trennt, so dass zwischen den beiden Zylinderräumen der Kolben-Zylinder-Anordnung über das Ventil V keine Verbindung besteht. Bei einem Stromausfall fällt jedoch die von der Spule 35 und dem Anker 30 erzeugte Stellkraft weg und das Schließelement 20 bewegt sich unter der Einwirkung der dann nur noch wirkenden Federkraft schlagartig in die Freigabeposition. In der Freigabeposition ist der erste Kammerzugang 11 mit den zweiten Kammerzugängen 12 verbunden, so dass sich über diese Verbindung die beiden Zylinderräume der Kolben-Zylinder-Anordnung im Druck ausgleichen können. Die hydraulische Lenkunterstützung fällt zwar weg, kann aber dann die rein manuell vorzunehmenden Lenkbewegungen nicht blockieren.

Bezugszeichen:

1     Ventilkammergehäuse
2     Schließelement-Gleitführung
3     Buchse
4     Ventilsitz
5     Spulengehäuse, äußere Struktur
6     Spulengehäuse, innere Struktur
7     Spulengehäuse, Bügel

| 8 | Druckhülse |
|---|---|
| 9 | Anker-Gleitführung |
| 10 | Ventilkammer |
| 11 | Kammerzugang |
| 12 | Kammerzugang |
| 13 | Rückwärtiger Gehäuseraum |
| 14 | Ausgleichsraum |
| 15 | Hülse |
| 16 | Anschlag |
| 20 | Schließelement |
| 21 | Schließelement-Hohlraum |
| 22 | Stützelement |
| 23 | äußere Aufweitung |
| 24 | Schließfläche |
| 25 | Federeinrichtung |
| 30 | Anker |
| 31 | Anker-Hohlraum |
| 32 | Aufweitung |
| 33 | Ausgleichsöffnung |
| 34 | - |
| 35 | Spule |
| 36 | Spulenanschluss |
| 40 | Zylinder |
| 41 | Kolben |
| 42 | Pumpe |
| 43 | Pumpenantrieb |
| $D_A$ | Außendurchmesser |
| $d_A$ | Innendurchmesser |
| $D_S$ | Außendurchmesser |
| $d_S$ | Innendurchmesser |
| H | Hublänge |
| K | Durchmesser am Ventilsitz |
| L | Ventilachse |
| X | Schließrichtung |
| -X | Freigaberichtung |

**Patentansprüche**

1. Elektromagnetisches Sitzventil umfassend:

    1.1 ein Ventilgehäuse (1-15) mit einer Ventilkammer (10), in die ein erster Kammerzugang (11) und ein zweiter Kammerzugang (12) für ein Fluid münden,
    1.2 einen Ventilsitz (4), über den der erste Kammerzugang (11) in die Ventilkammer (10) mündet und der um eine Ventilachse (L) umläuft,
    1.3 ein Schließelement (20), das in eine Schließrichtung (X) bis in eine Schließposition, in der es mit Dichtkontakt am Ventilsitz (4) anliegt und den ersten Kammerzugang (11) vom zweiten Kammerzugang (12) trennt, und in eine Freigaberichtung (-X) bis in eine Freigabeposition, in der es den Ventilsitz (4) freigibt, in axialer

Richtung ($\pm$X) hin und her beweglich ist, und
    1.4 eine elektrische Spule (35) und einen in axialer Richtung ($\pm$X) hin und her beweglichen Anker (30) zur Erzeugung einer Stellkraft, die in axialer Richtung ($\pm$X) auf das Schließelement (20) wirkt,
    1.5 wobei das Schließelement (20) einen Schließelement-Hohlraum (21) aufweist, der sich von einer dem ersten Kammerzugang (11) axial zugewandten vorderen Hohlraummündung bis zu einer dem ersten Kammerzugang (11) axial abgewandten Rückseite des Schließelements (10) durch das Schließelement (20) erstreckt,
    und/oder
    1.6 wobei der Anker (30) einen Anker-Hohlraum (31) aufweist, der sich von einer axial zum ersten Kammerzugang (11) weisenden Vorderseite des Ankers (20) bis zu einer rückwärtigen Hohlraummündung an einer dem ersten Kammerzugang (11) axial abgewandten Rückseite des Ankers (20) durch den Anker (30) erstreckt.

2. Elektromagnetisches Ventil nach dem vorhergehenden Anspruch, wobei sich durch das Schließelement (20) und den Anker (30) axial zusammenhängend ein einheitlicher Hohlraum (21, 31) erstreckt, der den Schließelement-Hohlraum (21) und den Anker-Hohlraum (31) umfasst.

3. Elektromagnetisches Ventil nach dem vorhergehenden Anspruch, wobei der einheitliche Hohlraum (21, 31) an der vorderen Hohlraummündung des Schließelements (20) in den ersten Kammerzugang (11) und an einer rückwärtigen Hohlraummündung in einen rückwärtigen Gehäuseraum (13) mündet, so dass der einheitliche Hohlraum (21, 31) den ersten Kammerzugang (11) mit dem rückwärtigen Gehäuseraum (13) verbindet.

4. Elektromagnetisches Ventil nach einem der vorhergehenden Ansprüche, wobei das Schließelement (20) über Alles gemessen ein Gesamtvolumen aufweist und dieses Gesamtvolumen höchstens dem 4-fachen oder höchstens dem 3-fachen des Volumens des Schließelement-Hohlraums (21) entspricht.

5. Elektromagnetisches Ventil nach einem der vorhergehenden Ansprüche, wobei der Anker (30) über Alles gemessen ein Gesamtvolumen aufweist und dieses Gesamtvolumen höchstens dem 5-fachen oder höchstens dem 4-fachen des Volumens des Anker-Hohlraums (31) entspricht.

6. Elektromagnetisches Ventil nach einem der vorhergehenden Ansprüche, wobei das Schließelement (20) und der Anker (30) Bestandteil einer axial translatorischen Bewegungseinheit (20, 30) sind, die einen einheitlichen Hohlraum (21, 31) aufweist, der den Schließelement-Hohlraum (21) und/oder den Anker-Hohlraum (31) umfasst.

7. Elektromagnetisches Ventil nach dem vorhergehenden Anspruch, wobei die Bewegungseinheit (20, 30) über Alles gemessen ein Gesamtvolumen und im Gesamtvolumen den einheitlichen Hohlraum (21, 31) aufweist und das Gesamtvolumen höchstens dem 5-fachen oder höchstens dem 4-fachen des Volumens des einheitlichen Hohlraums (21, 31) entspricht.

8. Elektromagnetisches Ventil nach einem der vorhergehenden Ansprüche, wobei sich der Anker-Hohlraum (31) in einem rückwärtigen Hohlraumabschnitt (32) in Richtung auf die rückwärtige Hohlraummündung radial, beispielsweise konisch, weitet.

9. Elektromagnetisches Ventil nach einem der vorhergehenden Ansprüche, wobei der erste Kammerzugang (11) axial auf der Höhe des Ventilsitzes (4) eine durchströmbare Querschnittsfläche hat, die der Größe nach einer Kreisfläche mit dem Durchmesser K entspricht, und das Schließelement (20) bei einer Bewegung aus der Schließposition in die Freigabeposition einen Hub der Länge H ausführt, wobei gilt:

$$K \geq 3 \cdot H \text{ oder } K \geq 4 \cdot H.$$

10. Elektromagnetisches Ventil nach einem der vorhergehenden Ansprüche, wobei das Schließelement (20) und der Anker (30) Bestandteil einer axial translatorischen Bewegungseinheit (20, 30) und in der Bewegungseinheit (20, 30) durch einen axialen Anschlagkontakt, der in die Schließrichtung (X) und die Freigaberichtung (-X) wirkt, gekoppelt sind.

11. Elektromagnetisches Ventil nach einem der vorhergehenden Ansprüche, umfassend eine Federeinrichtung (25) zur Erzeugung einer Federkraft, die der Stellkraft entgegen auf das Schließelement (20) wirkt, wobei die Stellkraft vorzugsweise in Schließrichtung (X) und die Federkraft vorzugsweise in Freigaberichtung (-X) auf das Schließelement (20) wirken.

12. Elektromagnetisches Ventil nach dem vorhergehenden Anspruch, wobei das Schließelement (20) eine Federabstützung (22) aus mehreren am Außenumfang des Schließelements (20) lokal nach außen vorragenden Stützelementen aufweist, an denen die Federeinrichtung (25) axial abgestützt ist.

13. Elektromagnetisches Ventil nach einem der vorhergehenden Ansprüche, wobei das Ventilgehäuse (1-15) für das Schließelement (20) eine axiale Schließelement-Gleitführung (2) bildet und vorzugsweise über die Schließelement-Gleitführung (2) abgedichtet ist.

14. Elektromagnetisches Ventil nach einem der vorhergehenden Ansprüche, wobei das Ventilgehäuse (1-15) für den Anker (30) eine axiale Anker-Gleitführung (9) bildet.

15. Elektromagnetisches Ventil nach einem der vorhergehenden Ansprüche, wobei das Ventilgehäuse (1-15) ein Ventilkammergehäuse (1) mit einem Mantelabschnitt aufweist, der die Ventilkammer (10) und den Ventilsitz (4) umgibt und an einem Umfang den zweiten Kammerzugang (12) aufweist, wobei der Ventilsitz (4) in axialer Richtung (±X) zum zweiten Kammerzugang (12) vorzugsweise um weniger als eine größte axiale Weite des zweiten Kammerzugangs (12) versetzt ist.

16. Elektromagnetisches Ventil nach einem der vorhergehenden Ansprüche, das als Sicherheitsventil (V) in einem Hydrauliksystem zur Unterstützung der Lenkung eines Fahrzeugs verwendet wird.

**Fig. 1**

**Fig. 2**

EP 4 696 913 A1

A - A

Fig. 3

EP 4 696 913 A1

Fig. 4

Fig. 5

Fig. 6

EP 4 696 913 A1

Fig. 7

Europäisches Patentamt
European Patent Office
Office européen des brevets

# EUROPÄISCHER RECHERCHENBERICHT

Nummer der Anmeldung

EP 25 19 2619

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 103 32 345 A1 (CONTINENTAL TEVES AG & CO OHG [DE]) 19. August 2004 (2004-08-19) * das ganze Dokument * ----- | 1-16 | INV. F16K31/06 |
| X | CN 104 145 145 A (BORGWARNER INC) 12. November 2014 (2014-11-12) * das ganze Dokument * ----- | 1-9,11, 13-16 | |
| X | DE 10 2015 116909 A1 (KENDRION GMBH [DE]) 6. April 2017 (2017-04-06) * das ganze Dokument * ----- | 1-3,6,8, 10,11, 13,14,16 | |

RECHERCHIERTE SACHGEBIETE (IPC)

F16K

Der vorliegende Recherchenbericht wurde für alle Patentansprüche erstellt

| Recherchenort | Abschlußdatum der Recherche | Prüfer |
|---|---|---|
| Den Haag | 4. Dezember 2025 | Schumacher, G |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument
.........................................................................
& : Mitglied der gleichen Patentfamilie, übereinstimmendes
  Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 25 19 2619

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-12-2025

| Im Recherchenbericht angeführtes Patentdokument | Datum der Veröffentlichung | Mitglied(er) der Patentfamilie | Datum der Veröffentlichung |
|---|---|---|---|
| DE 10332345 A1 | 19-08-2004 | KEINE | |
| CN 104145145 A | 12-11-2014 | CN 104145145 A | 12-11-2014 |
| | | EP 2825800 A1 | 21-01-2015 |
| | | EP 3667133 A1 | 17-06-2020 |
| | | JP 6177870 B2 | 09-08-2017 |
| | | JP 6371888 B2 | 08-08-2018 |
| | | JP 2015511689 A | 20-04-2015 |
| | | JP 2017215043 A | 07-12-2017 |
| | | KR 20140134307 A | 21-11-2014 |
| | | US 2015041693 A1 | 12-02-2015 |
| | | US 2017314684 A1 | 02-11-2017 |
| | | WO 2013138144 A1 | 19-09-2013 |
| DE 102015116909 A1 | 06-04-2017 | CN 108138984 A | 08-06-2018 |
| | | DE 102015116909 A1 | 06-04-2017 |
| | | EP 3359851 A1 | 15-08-2018 |
| | | RU 2018111250 A | 07-11-2019 |
| | | US 2019078701 A1 | 14-03-2019 |
| | | WO 2017060141 A1 | 13-04-2017 |

EPO FORM P0461

Für nähere Einzelheiten zu diesem Anhang : siehe Amtsblatt des Europäischen Patentamts, Nr.12/82